# EUROPEAN PATENT APPLICATION

(11) **EP 2 224 741 A1**
(43) Date of publication of application: **01.09.2010**
(21) Application number: 10165022.4
(22) Date of filing: 17.07.2006
(51) Int. Cl.: H04N 7/10, H04N 17/00

(54) **TV-signal degradation compensation system**

(30) Priority: 15.07.2005 EP 05106540
(62) Divisional of application: 06777814.2
(71) Applicant: Unitron, 8970 Poperinge (BE)
(72) Inventor: Deleu, Stephen, 9080, Beervelde (BE)
(74) Representative: Sarlet, Steven Renaat Irène

(57) **Abstract**

TV-signal degradation compensation system (70; 80) comprising: at least one line for transporting a TV-signal from an input side to an output side, measurement means (73, 74) on each of the lines for measuring at least two signal characteristics of the TV-signal on that line, a programmable processing means (75; 83) connected to the measurement means and provided for comparing the measured signal characteristics with corresponding programmable reference values and determining a signal quality from each comparison, signal degradation compensation means (78, 79; 81, 82) on each of the lines, provided for compensating degradation of the transported TV-signal on the basis of the signal qualities determined by the programmable processing means.

## Description

### Technical field

The present invention generally relates to the field of TV-signal distribution systems for multiple dwelling units. More particularly, the invention relates to a TV-signal degradation compensation system for use in a TV-signal distribution system for multiple dwelling units.

### Background art

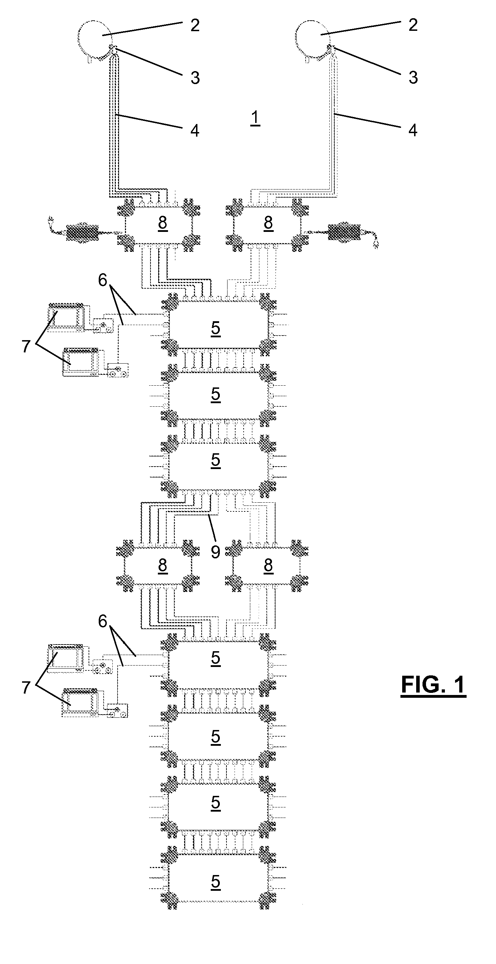

Multiple dwelling units (MDU) are systems where typically the satellite IF-band and terrestrial cable are distributed over different apartments or flats or the like. This can be done by the use of multiswitches, by the use of taps, such as for example described in EP 1 347 644 A2, or any other distributing devices known to the person skilled in the art. In the case of the multiswitches, it means that the signals coming from the head end (mostly on the roof) will be distributed over the whole building by cascading an amount of multiswitches. Typically, they will be installed inside the technical shaft of the building, and at each floor, customer drops will be tapped off to provide signals to the end-users. This is shown in figure 1. In every brand of multiswitches different types are available: mostly the range constitutes of 1 terrestrial input combined with 2, 4, 8, 12 or 16 satellite IF inputs and different amounts of taps, ranging typically from 4 to 24 customer drops. Unitron also provides multiswitches under the brand Johansson, see references 9940 to 9989. In most applications, each multiswitch (no matter how many inputs and how many outputs) acts the same: they bypass the "vertical" lines while tapping off a small amount of energy for the customer drop. The "vertical" lines then can be fed into the next multiswitch (cascading principle).

In all applications where multiswitches or other "cascadable units" are used, it is clear that a professional installation is needed. If the first units are not well tuned, it may affect the whole system. Therefore, the installer needs to use expensive measurement equipment for fine-tuning the system.

Nowadays, the installer more and more uses specialized software which takes into account a lot of parameters of the system, like carrier-to-noise, power and distortion, gain/loss, etc. to calculate the whole system in advance. However, this software is still based on assumptions, for instance what is the output level of the head end, what is the loss of the interconnecting coaxial cables, etc. In reality, the characteristics of the installed system usually differ from the assumed values, so the installed system still needs to be checked in the field. Consequently, the software does not relieve the installer from needing expensive measurement equipment.

### Disclosure of the invention

It is an aim of the invention to provide a signal degradation compensation system with improved compensation capabilities.

As used herein, "TV-signal" is intended to mean any signal at any frequency which carries TV images, whether aerial or terrestrial.

As used herein, by "vertical lines" is not intended that the lines necessarily extend in vertical direction. This is just the term which is used in the art since the lines for transporting signals usually extend from a head end on the roof up to for example a multiswitch for the flats on the ground floor.

As used herein, by "horizontal lines" is not intended that the lines necessarily extend in horizontal direction. This is just the term which is used in the art for the lines which are branched off from the vertical lines to for example connect a customer to a multiswitch.

As used herein, with "cascadable unit" is meant any TV-signal distribution unit which is installed on one or more vertical lines of a TV-signal distribution system.

The signal degradation compensation system of the invention comprises the following features:
- at least one line for transporting a TV-signal from an input side to an output side,
- measurement means on each of the lines for measuring at least two signal characteristics of the TV-signal on that line,
- a programmable processing means connected to the measurement means and provided for comparing the measured signal characteristics with corresponding programmable reference values and determining a signal quality from each comparison,
- signal degradation compensation means on each of the lines, connected to said programmable processing means and provided for compensating degradation of the transported TV-signal on the basis of the signal qualities determined by the programmable processing means.

In a preferred embodiment, the signal degradation compensation means are located upstream of the measurement means. This has the advantage that the programmable processing means is provided with feedback on the compensation.

In one embodiment of the signal degradation compensation system of the invention, the unit further comprises a user interface with indicator means for indicating each signal quality to an installer and control means by means of which the installer can control the signal degradation compensation means. The indicator and control means can be anything which is deemed suitable by the person skilled in the art, such as for example LEDs of different colours, an analog readout, an LCD or a light display, beep signals or any other visual or auditive indicator means. With this embodiment, the installer himself derives the necessary compensation from the information which is presented to him on the indicator means. The fact that the signal degradation compensation means are preferably upstream from the measurement means has the consequence that the installer gets feedback on his compensation, so that a correct compensation can be ensured.

The TV-signal degradation compensation system of the invention can be carried out as a single unit which incorporates the measurement means, the programmable processing means, as well as the signal degradation compensation means or as separate units, namely a measurement unit incorporating the measurement means and the programmable processing means and a compensation unit incorporating the signal degradation compensation means. In the latter case, the compensation unit can be mounted further upstream from the measurement unit to keep the number of devices in the dwelling of the end-user at a minimum.

In the case of a single unit, the programmable processing means can be further provided for interpreting the derived signal qualities and accordingly controlling the signal degradation compensation means. This embodiment has the advantage of automatic compensation of the signal degradation. The fact that the signal degradation compensation means are preferably upstream from the measurement means has the consequence that the processing means gets feedback on the performed compensation, so that a correct compensation can be ensured.

The invention can be applied on the "vertical lines", as have been described above, as well as on "horizontal lines", i.e. the so-called "customer drops" which branch off from vertical lines. Again, these "horizontal lines" do not necessarily extend in horizontal direction. In other words, the signal degradation compensation unit can be a TV-signal distribution unit or an intermediate unit, or any unit downstream from the TV-signal distribution units on the horizontal lines.

Preferably, each of the determined signal qualities comprises at least values which are indicative of the transported signal being "suitable" or "unsuitable" for distribution towards end-users. The "suitable" or "unsuitable" signal quality means that the installer or the processing means is informed whether or not the measured signal quality meets the requirements, which are programmed into the processing means by the programmable reference values. If the quality is "suitable", no compensations are considered necessary. If the quality is "unsuitable", compensation is considered necessary. Both qualities "suitable" and "unsuitable" can be subdivided in different values to provide further information.

In a preferred embodiment of the signal degradation compensation system of the invention, the measurement means are provided for measuring the signal level on at least two spaced apart frequencies within the bandwidth of the signal. Since the signal level typically has a linear variation over the bandwidth, the processing means can determine the signal level over the whole bandwidth of the signal from the two or more measurements of the signal level on the spaced apart frequencies. A negative slope in the signal level indicates degradation, so an appropriate compensation can be a slope adjustment, as well as a gain adjustment if the overall signal is too weak.

### Brief description of the drawings

The invention will be further elucidated by means of the following description and the appended figures.
Figure 1 shows a typical prior art system of TV-signal distribution units.
Figure 2 shows a system of TV-signal distribution units according to the invention before calibration.
Figure 3 shows a preferred embodiment of a TV-signal distribution unit, namely a so-called multiswitch.
Figure 4 shows the system of figure 2 after calibration.
Figure 5 shows another preferred embodiment of a TV-signal distribution unit, namely a so-called stacker.
Figure 6 shows the layout of a system comprising the TV-signal distribution units of figure 5.
Figure 7 shows another system comprising the TV-signal distribution units of figure 5 before calibration.
Figure 8 shows the input level of the TV-signal distribution units of the system of figure 7 before changes are made.
Figure 9 shows the input level of the TV-signal distribution units of the system of figure 7 while changes are being made.
Figure 10 shows the input level of the TV-signal distribution units of the system of figure 7 after calibration.
Figure 11 shows the system of figure 7 after calibration.
Figure 12 shows a preferred embodiment of a signal degradation compensation system of the invention.
Figure 13 shows an alternative preferred embodiment of a signal degradation compensation system of the invention.
Figure 14 shows the signal level on a "horizontal line" before compensation.
Figure 15 shows the signal level on a "horizontal line" during compensation.
Figure 16 shows the signal level on a "horizontal line" after compensation.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

The subject-matter described below with reference to figures 1-11 is per se outside the scope of the invention, but serves to provide a better understanding of the invention.

In the following, preferred embodiments will be described in which the signal characteristic which is measured is the signal level. The invention can however also be applied to measure and adjust any other signal characteristic. The idea of these preferred embodiments is to indicate in a visual manner what the levels are at certain points of the installation, for instance the level at each interconnection between the cascadable units can be visualized. As mostly several level indicators will be installed, this gives a simple overview of the whole system in the blink of an eye.

The typical prior art system of figure 1 comprises a head end 1 with a couple of satellite dishes 2, each with an associated low noise block (LNB) 3. Eight "vertical lines" 4 run downwards from the head end 1 crossing the various floors of the MDU where cascadable TV-signal distribution units 5 are installed for distributing the signals on the vertical lines via "horizontal lines" 6 towards the end-user devices 7 (TVs, VCRs etc.) A terrestrial line 9 is added to the vertical lines from the uppermost cascadable unit onwards. All connections are made by means of coaxial cables. Usually, amplifiers 8 are installed between the head end 1 and the uppermost cascadable unit 5 and also somewhere in between two cascadable units 5, where the installer guesses that an amplifier is needed to boost up the level again. This is the trial-and-error method, which results in the system of figure 1. Disadvantages are that sufficient signal level on all stages after the complete system has been installed cannot be ensured, that the use of hardware is not optimal since for example too many amplifiers have been installed and that the system has to be calculated in advance with expensive software.

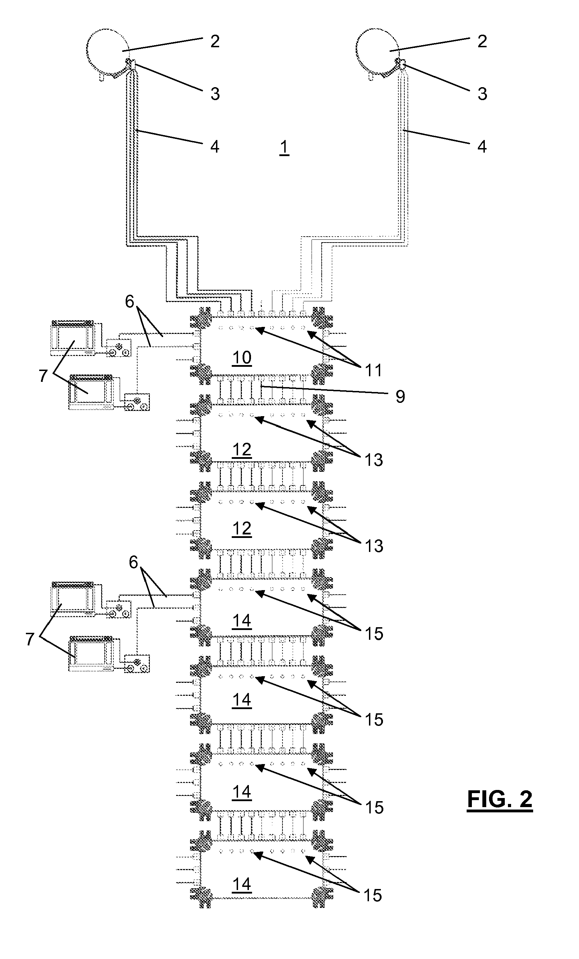

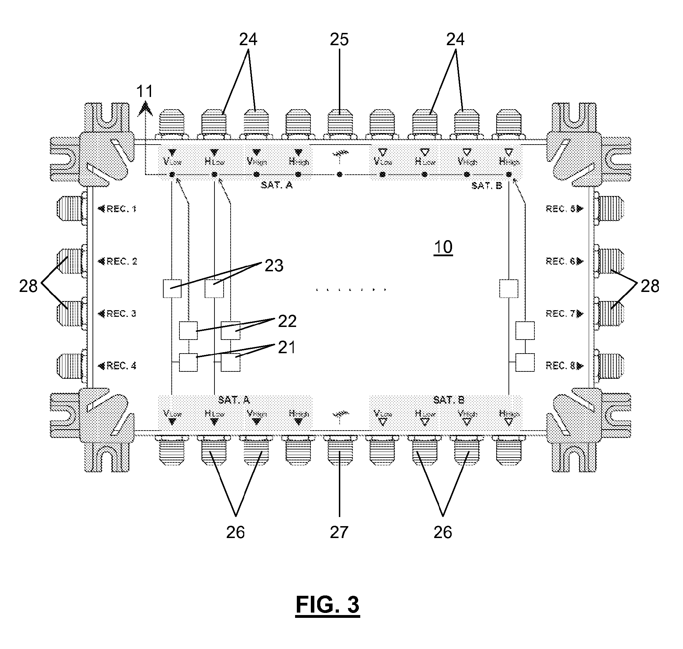

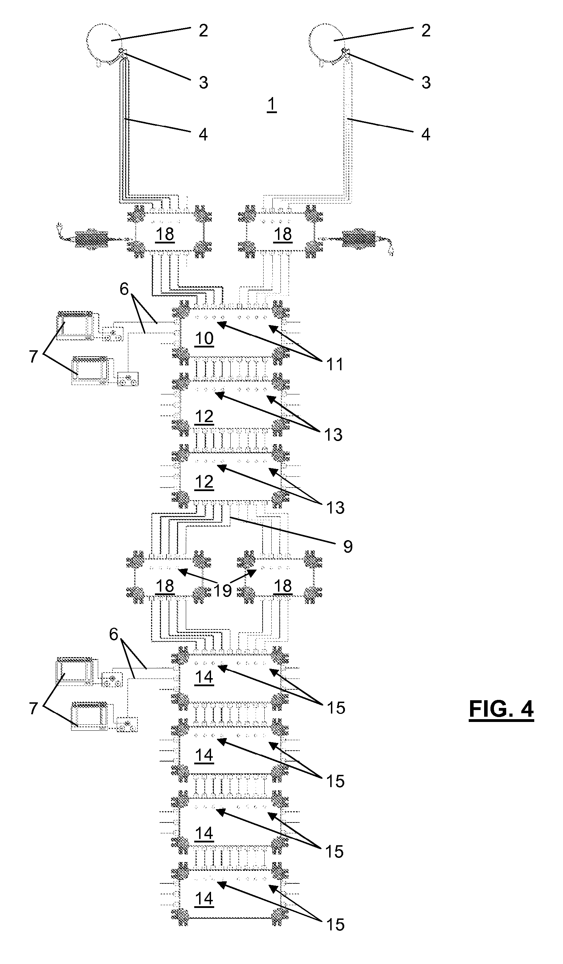

The system of figures 2 and 4 differs from the prior art system of figure 1 in the use of cascadable units 10, 12, 14 which are provided with signal level indicator LEDs 11, 13, 15 (these are all the same units, but different reference numbers are used to indicate different LED indications in figure 2). The cascadable unit 10, 12, 14 which is used in this system is shown in figure 3. It comprises on each vertical line a signal level measurement element 21, a processor 22 connected to the measurement element 21 and an amplifying/attenuating circuit 23 for enabling the installer to control the signal level on the vertical lines to a given extent on the cascadable unit itself. The amplifiers 18 which are installed as intermediate units of the system of figures 2 and 4 enable a larger variation of the signal level than the smaller amplifying/attenuating circuits 23 on the units. The processor 22 is connected to the measurement element 21 and provided for comparing the measured signal level a pre-programmed reference window and determining a signal quality from the comparison. Although separate processor blocks are shown in figure 3, it is also possible to use a common processor for all the vertical lines. The programmable reference window can be programmed into each of the cascadable units 10, 12, 14 at the factory and/or in the field. The processor 22 determines whether the signal quality of the transported signal is "suitable" or "unsuitable" for distribution towards the end-users and passes this information on to the installer by means of the LED 11, 13, 15. In the embodiment of figure 3, "suitable" means that the level is within the window, whereas "unsuitable" can mean above or below the window. The LEDs shown are bicolour LEDs, say for instance that green indicates an acceptable level, red means a too strong level and a third color (blinking red or yellow/orange (created by alternating the red and green)) can indicate a too weak signal. However, any other indicator means known to the person skilled in the art may also be used. For reasons of simplicity, the colours green, red and blinking red are used in the description below for indicating the respective levels, but it is evident that the choice of colours is arbitrary.

The cascadable unit 10 of figure 3 is a so-called multiswitch with on input side eight satellite IF inputs 24 and one terrestrial input 25, on output side eight satellite IF outputs 26 and one terrestrial output 27 for connection to the input side of the next multiswitch, and further eight so-called customer drops 28 for horizontal lines towards the end users 7. The internal circuitry connecting the customer drops 28 to the inputs 24, 25 and the operation principles of passing on the signals from the inputs 24, 25 to the customer drops 28 are known in the art and will therefore not be further described here. This is for example described in EP 1 347 644 A2, which is hereby incorporated by reference in its entirety.

With the system of figure 2, the installation occurs somewhat different. The whole system can for example be installed at once, making all interconnections from the head end 1 up to the end users 7 without taking the signal level into account. The simplicity can be seen in the next fine-tuning of the installation. The next action of the installer is to check the LEDs 11 of the first cascadable unit 10 (closest to the head end). If these are green, it means the head end is well dimensioned, if some of them are red, those specific "vertical" lines have to be attenuated, for instance by means of an attenuator, if some of them are blinking red, an amplifier 18 will have to be connected before the first unit on those specific "vertical" lines. Say in the latter is the case and amplifiers 18 are installed in the head end 1, after which the signal level is adjusted by means of the amplifying circuitry of the amplifiers 18 where necessary. Once all the LEDs 11 of the first cascadable unit 10 are green, the installer can easily check the influence of this action on the downstream cascadable units 12, 14. By looking at the LEDs 13, 15 of the second, the third, the fourth cascadable unit etc., he can check the signal level at each unit. As long as all the LEDs 13, 15 of the unit are green, no actions are required. Only when he encounters a red or red blinking LED, a new action has to be taken similar as before, of course depending on the color of the LED. Say the LEDs 13 of the second and third unit 12 are all still green, but that the fourth and further units 14 have one or more blinking red LEDs 15. This means that the signal level at the output side of the third unit has become too low on those vertical lines and that an amplifier 18 is needed in between the third and fourth cascadable units. The final result should be that all LEDs of all units are green, this means the system is calibrated. For the best result, the installer should begin at the input of the installation (for instance the headend) and work his way down step by step until the last unit. The final result is shown in figure 4. Like in this figure, even the amplifiers 18, which form intermediate units, could be produced with level indicators 19.

Alternatively, the installation can also be performed by installing the cascadable units 10, 12, 14 one by one, checking the signal levels and making the necessary adjustments if necessary before installing the next cascadable unit.

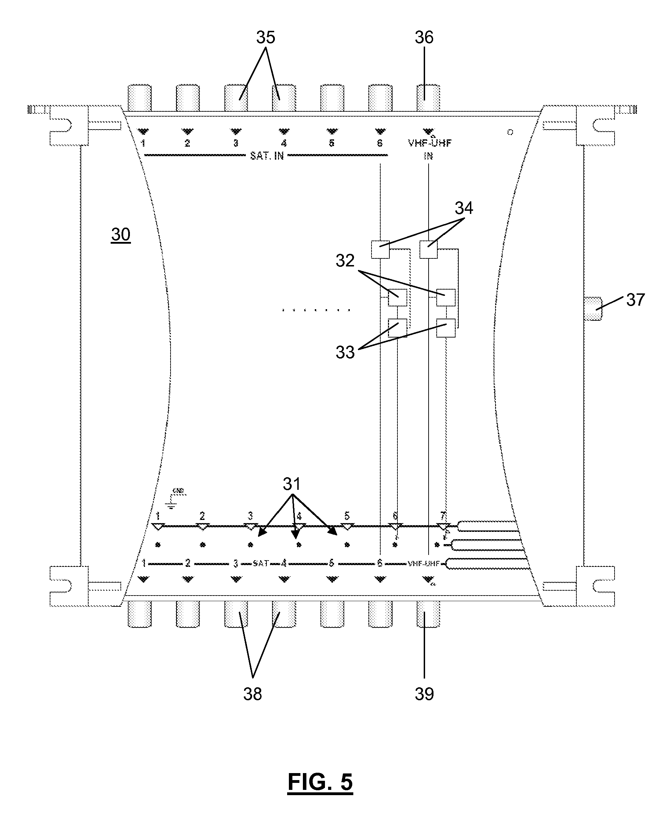

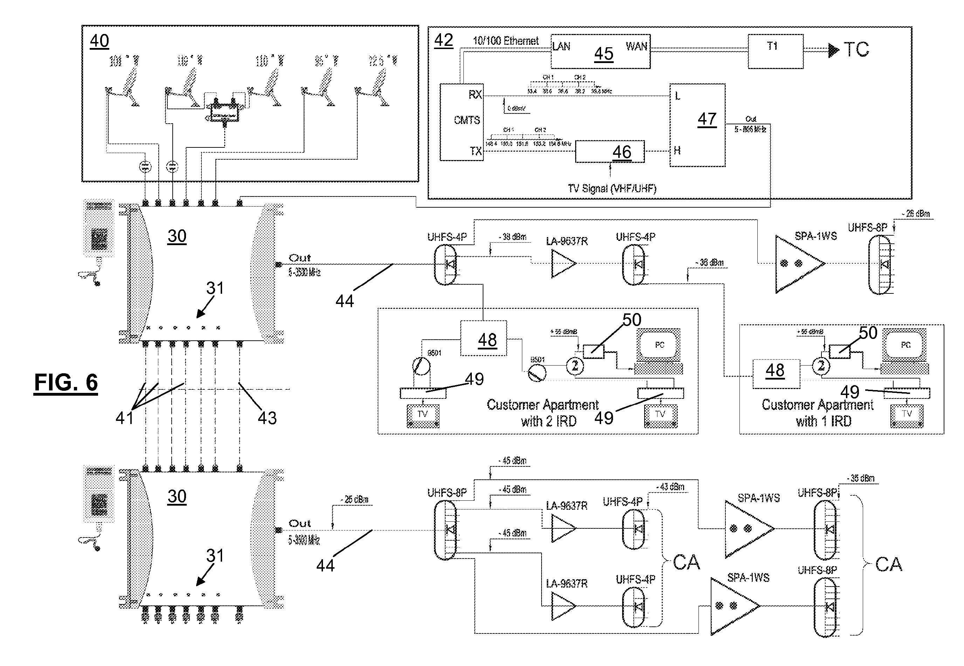

Another possible embodiment is based on other existing products of Unitron, where the cascading principle is present as well, such as for example the SCU-2P3MDC, the SCU-4P5MTB, or other cascadable units. The cascadable unit 30 shown in figure 5 is based on Unitron's SCU-4P5MTB, a so-called "stacker". These stackers 30 are connected in cascade on the vertical lines, here six satellite IF inputs 35 and outputs 38 are provided alongside one terrestrial input 36 and output 39. Of course, the number of inputs and outputs can vary for different embodiments. Each stacker 30 taps off a small amount of energy from each vertical line, while sending most of the energy to the next cascadable stacker. This amount being tapped off can even be larger than what is being sent to the next cascadable unit, without affecting the applicability of the system. Each stacker 30 performs a frequency multiplexing on the signals it receives on its inputs and stacks the frequency multiplexed signals together into a single wideband signal which is then placed on the horizontal line or "customer drop" 37. This horizontal line can be further supplied to different end users via a single cable and pass splitters, taps, amplifiers, cable-attenuation, or other possible devices before reaching a "de-stacker" at the end user. Such a system is shown in Fig. 6. With the version of the stacker 30 shown in figure 5, there is an automatic gain control (AGC) on each tap of each line, but this does not interfere with the vertical lines, it just sets the level at the input of the multiplexing circuitry.

The detection circuit 32 of the AGC can act as the measurement means. Each of the AGCs outputs a voltage which is a representation of the signal level at each input 35, 36. This representation can be linear but does not need to be, it can even be inverse, meaning the higher the signal level, the smaller the voltage. Next, this voltage can be fed into the microcontroller 33 of the AGC, which can be programmed by the manufacturer to decide if the signal level falls within a given window. In this example, the decision on the colour of the LEDs 31 can for instance be:
- < -45dBm : Blinking Red : Signal level is too weak
- -45dBm to -25dBm : Green : Signal level is good
- >-25dBm : Red : Signal level is too high

Of course the microcontroller gives a very flexible solution as it can be programmed what the range will be, what colour the LED should have in each range, etc. If desired, it could even be (re-)programmed in the field. The microcontroller 33 is further linked with an amplifying/attenuation circuit 34 by means of which it can adjust the signal level on the vertical line to a given extent if necessary.

The system of figure 6 is a video/internet integrated system comprising a satellite outdoor unit system 40 from which the vertical lines 41 depart and an internet head end 42 from which the terrestrial vertical line 43 departs. In the internet head end 42, the following components can be distinguished: a telephone company connection TC, a termination T1, a router 45, a cable modem termination system CMTS, a combiner 46 and a diplexer 47, which are known in the art and therefore need no further explanation here. The vertical lines 41, 43 pass a number of stackers 30 equipped with LEDs 31. The stackers 30 convert the signals on the vertical lines 41, 43 to wideband signals on the horizontal lines 44, which are supplied to customer apartments CA via one or more of the following distribution devices: splitters UHFS-4P and UHFS-8P, amplifiers LA-9637R, which are known in the art and therefore need no further explanation here, and signal degradation compensation units SPA-1WS, which will be discussed further on. In the customer apartments, the following devices can be distinguished: a "de-stacker" 48, satellite integrated receiver decoders (IRD) 49 associated with each TV set, modems 50 associated with PCs, which are known in the art and therefore need no further explanation here. Throughout the system, examples of possible signal levels are indicated in dB along with examples of possible frequencies or ranges in MHz.

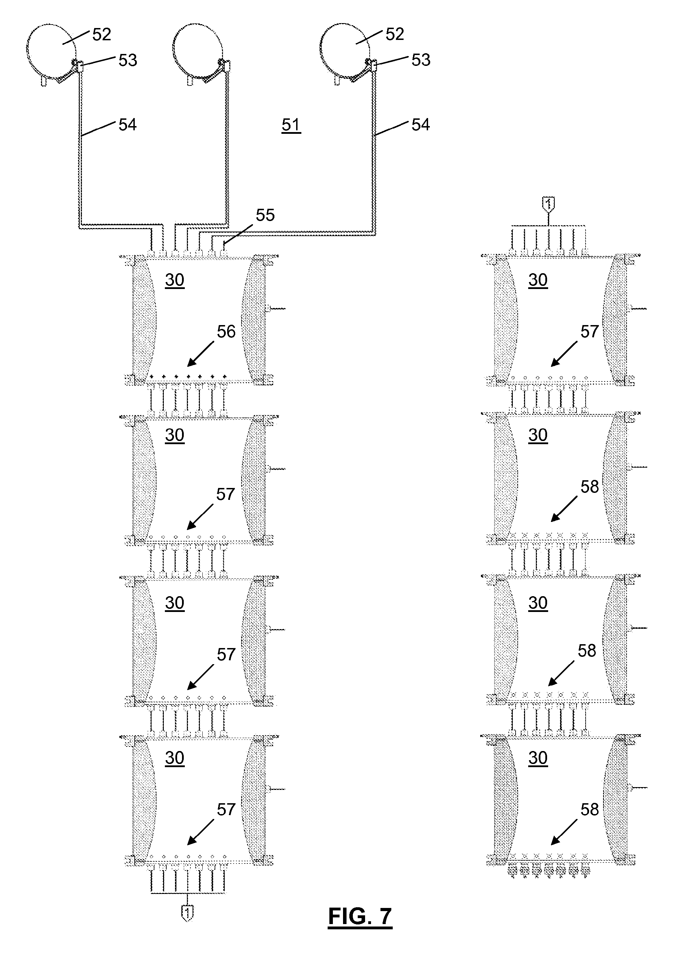

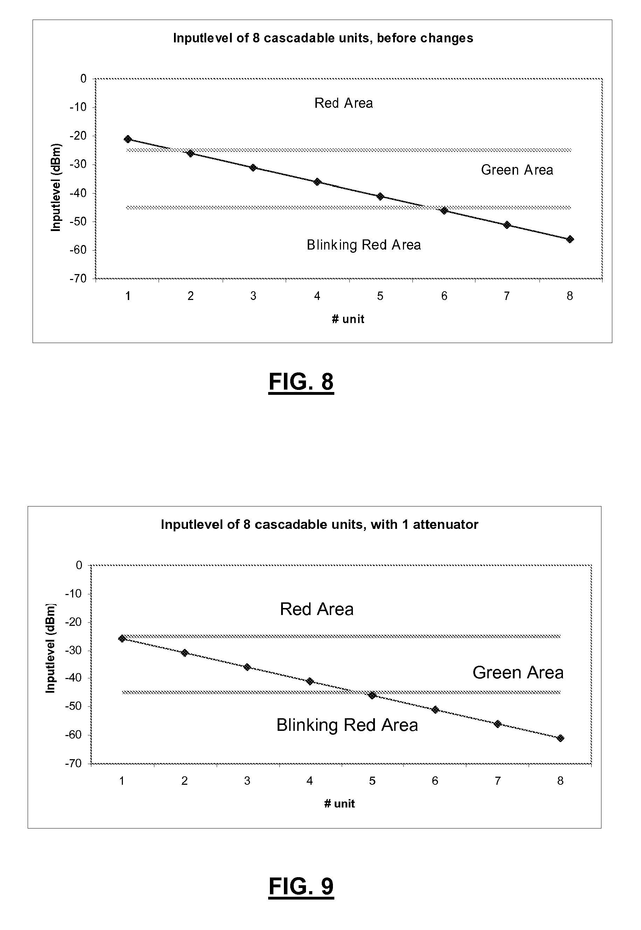

In figure 7 a system is shown with 8 stackers 30 in cascade before calibration, i.e. the installation has been completed by installing all the stackers in cascade as a group without taking care of the signal level. Like before, the system comprises a head end 51 with satellite dishes 52 and LNBs 53, resulting in six vertical lines 54. Again, there is one additional terrestrial line 55. For simplicity of the following explanation, all vertical lines are supposed to have the same signal level over the whole system, but it is evident that in reality this may not be the case. In figure 8 the variation of signal level over the system is shown at the input of each stacker 30. It is clear that the 8 stackers can not all operate within the green window of 20dB, as each unit can have a loss of up to 5dB (included cable loss). As shown in figure 8, only the second to fifth units have an input level within this window, while the first unit has an input level above the window and the sixth to eighth units have an input level below the window. This situation is reflected in figure 7: the LEDs 56 of the uppermost unit are coloured red, the LEDs 57 of the four following units are coloured green and the LEDs 58 of the bottom three units are blinking red. In this situation, even though the LEDs 57 of the second to fifth units are coloured green, these may still not be working in the proper condition, since the first unit is overdriven, which could have its influence on the overall system.

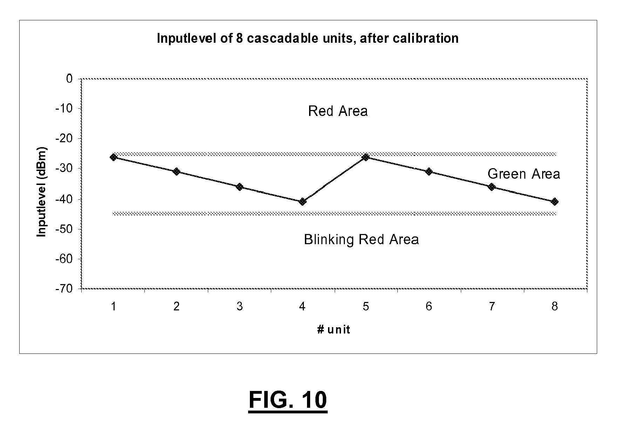

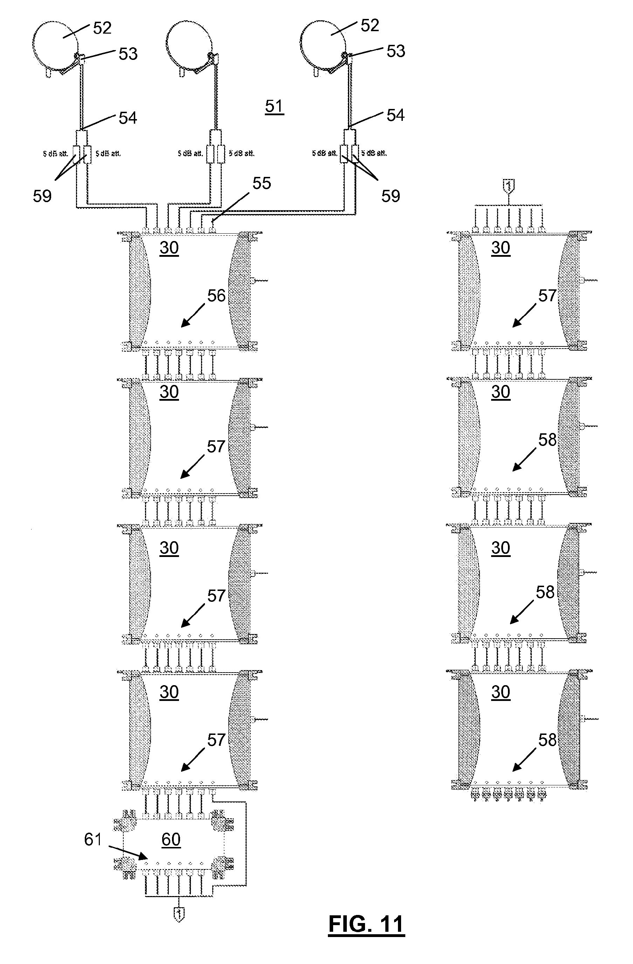

As the first stacker has a too high signal level, the first action of the installer should be to reduce this input level, coming from the head end 51. This can for instance be done by placing an attenuator 59 of for example 5dB on each vertical line 54 coming from the head end 51, as shown in figure 11. The result of this action is shown in figure 9: the first four units now have input levels falling within the green window, while due to the reduced level at the head end 51 now the bottom four units have input levels falling below the window. This will be indicated on the system by four sets of blinking red LEDs, so the next step by the installer should be to increase the input level before the fifth unit. This can for instance be done by inserting an amplifier 60 of 20dB, as shown in figure 11. The result of this action is shown in figure 10: now all units have input levels within the predetermined green window. As a result, in figure 11 all LEDs 56, 57, 58 on all eight stackers 30 are now green coloured. This means the installation is "calibrated" and ready to be used.

As appears from the above, it is important that the installer follows the direction of the signal, this means he first has to look at the LEDs of the first cascadable unit near the head end. And only when those are green, he can look at the second unit and act according the colour of these LEDs. As soon as also these LEDs are green, he can go to the next unit and so on. If he executes this algorithm until the last unit, the result will be a "calibrated system" with optimal, i.e. the least possible hardware usage.

In the above explanation of the calibration system of figures 7 and 11, all vertical lines were assumed to be equal and to be treated equally. For non-equal vertical lines, the use of adjustable attenuators and/or amplifiers is a possible solution to the problem. In this case, it could for example occur that at a certain point, the left-most amplifier is set at maximum gain, while the right-most amplifier on of that same certain point is set to the minimum gain. Even a mixture of amplifiers and attenuators at the inputs of the same cascadable unit can be necessary to obtain all green LEDs. In this case, it is preferred to use separate intermediate units, compared to for instance a "6-way amplifier in 1 housing" like the amplifier 60 in figure 11. This amplifier is also equipped with LEDs 61 to show the signal level at its output.

A small enhancement could be reached if the installer is educated to find the level where the LEDs are just not red, but green. This means the level at this point is just below the "too high" level. In this way, the maximum number of cascadable units can be connected without need of a next intermediate unit. This is the case if the cascadable units have insertion loss on the vertical lines. If they would have gain, then, depending on the length of the cable, it could be more useful to aim for the lowest part of the green window.

The above principles can also be based on 1 limit instead of 2 limits, for instance by defining only an upper limit for the signal level. In this case, the blinking red is eliminated, and the installer can only detect if the signal is too strong. The same can be worked out with only the red blinking lower limit.

In the cascadable units, a different amount of indicators can be implemented with respect to the amount of "vertical" lines. LEDs can be multiplexed or maybe some lines are not useful to be calibrated, like the terrestrial path in some cases.

Instead of incorporating the indicators inside the cascadable units, these indicators can also be designed as add-on products, only being inserted inside the system during installation. This could save costs as 1 indicator device can then serve several installations.

The above principle can also be used on the horizontal lines, acting as customer drops. A similar principle for detecting levels by a level indicator can be implemented. Implementing the invention in the horizontal lines can be treated in the same way as in the previously described vertical lines. So this will not be discussed in detail.

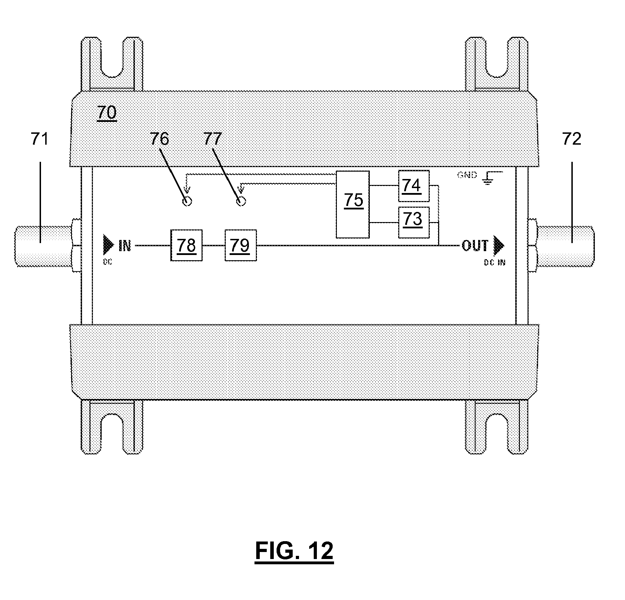

In the following, an enhanced embodiment of the invention will be described with reference to figures 12-16. In the following explanation, again LEDs will be used as level indicator, but it is clear that other solutions known to the person skilled in the art can be applied. The enhanced embodiment particularly makes the installation easier for the typical wideband signals as for example transported by the horizontal lines 44 in the system of figure 6. As described shortly above, the stacker 30 takes a copy of each of the vertical lines 41, 43 and applies a frequency multiplexing on these copies, which can then easily be summed together, resulting in one very wideband signal comprising all the copies. In the prior art, a disadvantage of this very wideband signal is, amongst others, that it is very sensitive for longer cables. This is due to the fact that the lower frequencies are almost not attenuated by the cable, while the higher frequencies are attenuated strongly. This results in big roll-offs. These can be compensated by adjustable slope units, but the installer can have problems to tune this adjustable slope. One of the reasons is that some of these very wideband signals are too wide for the standard measurement equipment which is available to the installer. Another more general problem in MDU-systems is the complexity, as now the installer not only has to set a certain amount of attenuators or adjustable amplifiers, but also adjustable slope units. This means a lot of measurements have to be done to tune all these variable units to the correct settings. With the enhanced embodiment of the present invention, it is possible to also simplify these complex adjustments, as will appear from the following.

For the explanation, the situation of figure 11 is assumed, i.e. a calibrated system of cascadable units 30 whose LEDs are all coloured green. Next, the signal on the horizontal lines is considered. In order to compensate for signal degradation for example in case of longer cables, signal degradation compensation units 70 are installed, like for example the SPA-1WS mentioned earlier with respect to figure 6. Such a unit 70 is shown in figure 12. It is provided for on the one hand amplifying the signal on a horizontal line and on the other hand adjusting the slope of this signal. The unit 70 comprises an input 71 and an output 72. Inside the housing, two measurement circuits 73 and 74 measure the signal level around two separated centre frequencies of the full (amplified) band. The measurements are fed to a microcontroller 75, which compares the measurement values with pre-programmed reference values and determines a signal quality for both centre frequencies. These signal qualities are indicated to the installer by means of two bicolour LEDs 76, 77, using the same colours as before. It is evident that here as well any other indicator means known to the person skilled in the art can be used. The installer can now use the information presented to him to control the adjustment circuitry 78, 79 for adjusting the overall signal level and the slope. These adjustment circuitry 78, 79 is located upstream of the measurement circuits 73, 74, so that the LEDs give the installer feedback on his adjustments.

For optimal performance, the centre frequencies are chosen apart as far as possible, meaning the first LED 76 is preferably indicating the level at the lowest frequency of the amplified band, while the second LED 77 indicates the level of the highest frequency of the amplified band. Again a window can be assigned to the two LEDs 76, 77. In the horizontal lines, other windows may be more appropriate than in the vertical lines, but this is a matter of choice and circumstances. A suitable window can for example be:
- <-25dBm : blinking red : signal level is too weak
- -25dBm to -20dBm : green : signal level is good
- >-20dBm : red : signal level is too high
Here, a tighter window has been set, to keep the signal even better under control. For reasons of simplicity, the same colours are used.

As mentioned, during installation of the customer drops with their distribution system, problems can appear with levels and slopes of the wideband signals. A typical customer drop can include 10m of cable, an 8-way splitter, again 10m of cable, a next 8-way splitter and 30m of cable before entering the customer premises to be connected with the customer device (de-stacker). With this 50m of cable, a slope of more than 20dB can be induced in some cases. With this typical customer drop, each cascadable unit is able to provide signal to 64 customers. The compensation unit 70 with 2 LEDs can now for instance be installed just before the last 8-way splitter, like in figure 6. As a result, the installer can now see the level of the lowest and the highest frequency band of the horizontal line at that point.

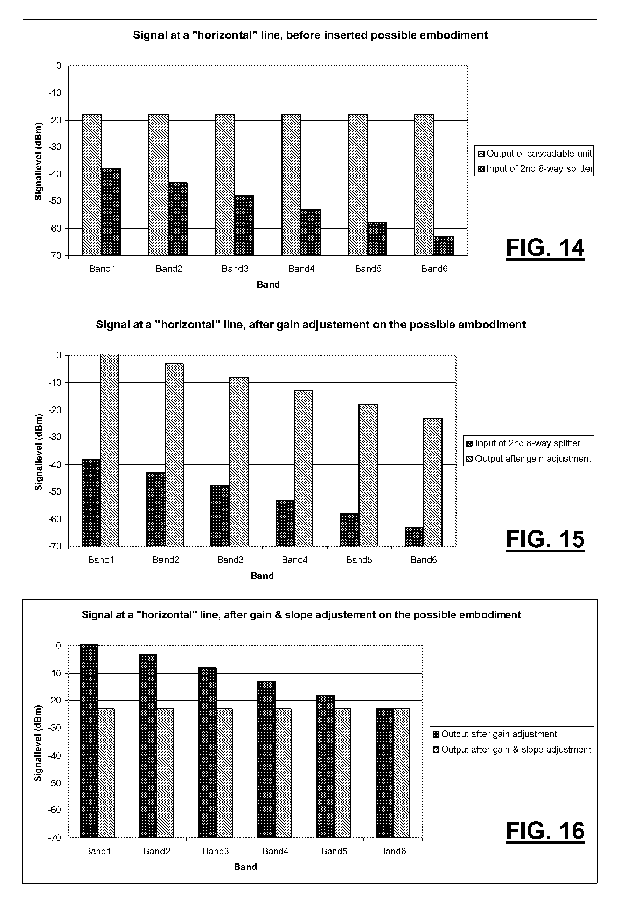

The system connected on the horizontal line can for example be calibrated as follows. Figure 14 shows a possible initial situation, which is thus in fact the situation at the input of the last 8-way splitter. The input signal of the compensation unit 70 is shown together with the signal originating from the cascadable unit 30. It can be seen that the signal has been attenuated over the full band, which can for example be caused by a splitter mounted upstream of the unit 70, and furthermore has been selectively attenuated (the higher the frequency, the more attenuation), which is for example the result of transportation of the signal over a longer cable. In the unit 70 both LEDs are blinking red as both the lowest and the highest band are below -25dBm. The installer can now for example first increase the gain by means of the gain adjustment circuitry 76 until the second LED 77 which monitors the highest band turns green. The impact of this adjustment is shown in figure 15, which compares the initial situation with the current situation after the gain adjustment. As shown, the signal at the lowest band is now above -20 dBm, so that the first LED 76 is coloured red. Next, the installer sets the slope adjustment circuitry 79 to flatten the characteristic, until the first LED which monitors the lowest band turns green. The impact of this adjustment is shown in figure 16, which compares the current situation with the situation before the slope adjustment. Now, the level of all bands is within the desired window and the customer drop has been calibrated.

If the signal cannot be adjusted by means of a single compensation unit 70, i.e. it is not possible to adjust such that both LEDs 76, 77 become green, the cause can be that the signal has degraded too much by the use of for example cheaper or bad performing adjustable amplifiers. In such a case, an iteration of two or more compensation units 70 can be used to solve the problem.

In alternative embodiments of signal degradation compensation devices or systems, other compensation circuitry may be used so that the calibration technique also becomes different. Furthermore, the compensation circuitry itself may be included in a separate unit from the unit with the measurement circuitry, the microcontroller and the indicators.

In the embodiment of figure 12, only two LEDs 76, 77 are used. Other embodiments of the present invention can have more LEDs, for instance the same amount as there are multiplexed bands on the horizontal line. In this way, all the different bands can be monitored. Also LCD-displays can be used, to improve the visualization of the different signal levels, or any other indicator means known to the person skilled in the art.

Not only the horizontal lines can have units with multiple LEDs per line, also the vertical lines can be equipped with units which detect not only the level of one band, but also the slope, or other signal characteristics. With similar amplifiers, with adjustable gain and slope, also the vertical lines could be compensated for gain and slope.

As the window of the LED colour can be (re-)programmed independently for the two LEDs 76, 77 of the compensation unit 70, the window for each LED can be set differently. This could be necessary if a long cable is expected behind the compensation unit 70. In this case, it can be advisable to set the window for the lowest band lower than the window for the highest band. For instance a difference of 5dB could be set, which would allow to compensate for an extra 10 or 15m of cable (depending on the type of cable and the frequency range of the wideband signal).

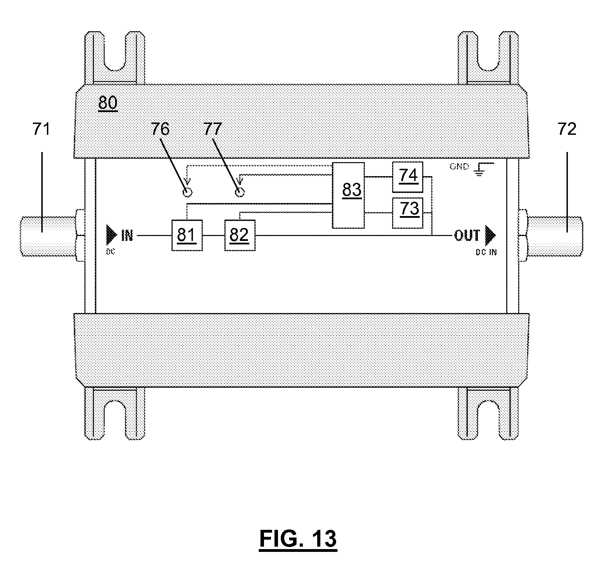

The compensation unit 80 of figure 13 is an alternative embodiment to that of figure 12. For the sake of brevity, only the differences will be described in the following. Here, the microcontroller 83 is linked to the gain and slope adjustment circuitry 81, 82, so that the calibration of both gain and slope is made automatic. In this embodiment, extra intelligence has been added to the microcontroller 83, which interprets both detected levels in the lowest and the highest band. From these 2 levels, the whole spectrum can be determined and compensated by means of both the adjustable gain and slope. This embodiment can thus be called Automatic Gain & Slope Adjustment (AGSC).

## Claims

1. TV-signal degradation compensation system (70; 80) comprising:
- at least one line for transporting a TV-signal from an input side to an output side,
- measurement means (73, 74) on each of the lines for measuring at least two signal characteristics of the TV-signal on that line,
- a programmable processing means (75; 83) connected to the measurement means and provided for comparing the measured signal characteristics with corresponding programmable reference values and determining a signal quality from each comparison,
- signal degradation compensation means (78, 79; 81, 82) on each of the lines, provided for compensating degradation of the transported TV-signal on the basis of the signal qualities determined by the programmable processing means.

2. TV-signal degradation compensation system (70; 80) according to claim 1, **characterised in that** said TV-signal degradation compensation means (78, 79; 81, 82) are located upstream of the measurement means.

3. TV-signal degradation compensation system (70; 80) according to claim 1 or 2, **characterised in that** the system further comprises a user interface with indicator means (76, 77) for indicating each signal quality to an installer and control means by means of which the installer can control the signal degradation compensation means (78, 79).

4. TV-signal degradation compensation system (70; 80) according to any one of the claims 1-3, **characterised in that** the measurement means (73, 74) and the programmable processing means (75) are incorporated in a measurement unit and the signal degradation compensation means (78, 79) are incorporated in a compensation unit separate from the measurement unit.

5. TV-signal degradation compensation system (70; 80) according to any one of the claims 1-3, **characterised in that** the measurement means (73, 74), the programmable processing means (75; 83) and the signal degradation compensation means (78, 79; 81, 82) are incorporated in a single unit (70; 80).

6. TV-signal degradation compensation system (70; 80) according to claim 5, **characterised in that** the signal degradation compensation means (81, 82) are connected to said programmable processing means (83) and that said programmable processing (83) means are further provided for interpreting the determined signal qualities and accordingly controlling the signal degradation compensation means (81, 82).

7. TV-signal degradation compensation system (70; 80) according to any one of the claims 1-6, **characterised in that** each of said signal qualities comprises at least values which are indicative of the transported signal being "suitable" or "unsuitable" for distribution towards end-users.

8. TV-signal degradation compensation system (70; 80) according to any one of the claims 1-7, **characterised in that** the measurement means are provided for measuring the signal level on at least two spaced apart frequencies within the bandwidth of the signal.

9. TV-signal degradation compensation system (70; 80) according to claim 8, **characterised in that** the signal degradation compensation means (78, 79; 81, 82) comprise gain adjustment circuitry (78; 81) and slope adjustment circuitry (79; 82).
